Europäisches Patentamt

European Patent Office

Office européen des brevets

(19)

(11) Publication number: **0 012 421**
**B1**

(12) **EUROPEAN PATENT SPECIFICATION**

(45) Date of publication of patent specification: **21.04.82**

(51) Int. Cl.³: **G 02 F 1/17**

(21) Application number: **79105067.7**

(22) Date of filing: **10.12.79**

(54) Electrochromic display cells.

(30) Priority: **29.01.79 US 7055**
**11.12.78 US 968319**

(43) Date of publication of application:
**25.06.80 Bulletin 80/13**

(45) Publication of the grant of the patent:
**21.04.82 Bulletin 82/16**

(84) Designated Contracting States:
**DE FR GB**

(56) References cited:
US - A - 3 339 996
US - A - 3 788 729

IBM TECHNICAL DISCLOSURE BULLETIN, vol. 14, no. 10, March 1972, pages 3018-3019 New York, USA
B. KAZAN "Liquid Crystal Display with Long Life"

(73) Proprietor: **International Business Machines Corporation**
**Armonk, N.Y. 10504 (US)**

(72) Inventor: **Wilbur, Clayton Vance**
**5651 Comanche Drive**
**San Jose, California 95123 (US)**

(74) Representative: **Lewis, Alan J.**
**IBM United Kingdom Patent Operations Hursley Park**
**Winchester, Hants, SO21 2JN (GB)**

(56) References cited:
RCA TECHNICAL NOTES, no. 824, 31st March, 1969, pages 1,2
Princeton, N.J. US
S. R. HOFSTEIN; "Improved Liquid Crystal Display Cell"

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

Electrochromic display cells

The invention relates to electrochromic display cells and it is an object of the present invention to provide an electrochromic display device with an increased lifetime.

Electrochromic display cells are well known in the prior art. For example, U.S. Patent 3,451,741 contains a very good description and discussion of such devices. In general, it may be said that an electrochromic display cell comprises an electrochromic solution positioned between two electrically conductive electrodes at least one of which is transparent. This electrochromic solution comprises an oxidant/reductant pair contained in a solvent along with a conductive salt.

At pages 3018/9 of the IBM Technical Disclosure Bulletin, Vol. 14, No. 10 March 1972 there is described a liquid crystal display device. The device comprises a planar chamber having a transparent front wall, a planar front electrode within the chamber and visible through the front wall, a planar back electrode in spaced relationship to the front electrode and dividing the chamber into an active display zone between the front and back electrodes and a supply reservoir behind the back electrode. The back electrode is mounted from the back wall of the chamber by a pair of springs which press the electrode against a number of spacers between the front electrode and the front wall. An annular gap is left between the rim of the back electrode and the inner peripheral wall of the chamber. Liquid interchange between the display zone and the reservoir occurs by diffusion.

The TDB device has the substantial disadvantage that the spacers, which are only 0.5 to 1.0 mils thick ($1.27 \times 10^{-3}$ cms to $2.54 \times 10^{-3}$ cms), have to be accurately positioned during assembly and maintained in position for the life of the cell. Since they are circular, unless the springs maintain a substantial force the spacers will move. The present invention aims to provide a display device which is considerably simpler to manufacture than the TDB device and which has a much more robust construction.

Another liquid crystal display device is described by Hofstein in RCA's Technical Note No. 824 dated 31 March 1969 pp 1-2. This device comprises a display region through which liquid crystal composition is moved from a supply conduit to a storage, exhaust composition reservoir.

U.S. Patent 3,922,645 is concerned with a visual display device comprising a rotatable fibre optic shutter. That device contains a reservoir for a light absorbing fluid, but the device is not an electrochromic device, and the reservoir is not for electrochromic solution.

U.S. Patent 4,036,551 shows an electrochromic display apparatus in which supply holes are driven through an electrode. The patent, however, does not show any reservoir.

It is an object of the present invention to provide a display device having a long life, which is capable of being fabricated on a commercial scale without undue difficulty and which is of a robust construction.

The present invention provides a display device comprising a planar chamber having a transparent front wall, a planar front electrode within the chamber and visible through the front wall, a planar back electrode in spaced relationship to the front electrode and dividing the chamber into an active, display zone between the front and back electrodes and a supply reservoir behind the back electrode, characterised in that the chamber is filled with an electrochromic solution so that the device provides an electrochromic display, that the periphery of the back electrode is sealed to the peripheral wall of the chamber, that the back electrode is arranged vertically within the chamber, and that the back electrode is apertured at vertically spaced positions to permit solution flow between the reservoir and the active display zone through the apertures by convection current flow during use.

And electrochromic display cell embodying the invention will now be described by way of example with reference to the accompanying drawings, in which:—

Figure 1 is a perspective view of the electrochromic display cell embodying the invention. The figure is not to scale.

Figure 2 (not to scale) is a section taken along line 2—2 of Figure 1.

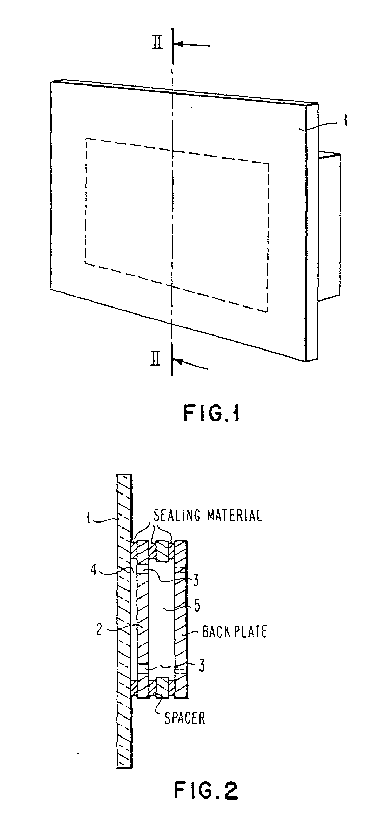

As is seen in Figure 2, the display cell comprises a transparent front electrode 1 and a back electrode 2 provided with vertical spaced holes 3. These holes provide for convective circulation between the display chamber 4 and the reservoir 5. As explained in U.S. specification No. 3451741 the transparent electrodes 1, 2 are formed of glass and have conductive coatings facing each other.

The use of the reservoir has been found experimentally to increase cell life. The explanation for this is not known with certainty, and the inventor does not wish to be bound by the following theory, which is offered merely as a possibility. The limited lifetime of electrochromic display cells is believed to be due to electrochromic degradation, which eventually causes the display to lose contrast.

Usually this occurs by a buildup of colour due to the electrochemically degraded material. This buildup is irreversible. After degradation buildup, a loss of the active ingredients occurs. Since the spacing between the electrodes is usually on the order of $2.5 \times 10^{-3}$ to about $7.5 \times 10^{-3}$ cms, it has been found very difficult to provide fresh solution to the cell. The present invention, by using a reservoir, greatly increases the volume of the cell and provides a recirculation path through the holes 3. This ensures better utilization of the solution and prevents localized buildup of the degraded material.

Recirculation occurs by natural convection, which can be augmented, for example, by providing thermal differential in the display. In some cases the convection flow due to the heat from the driven electrodes will be sufficient, but a separate heated electrode may be added when desired to improve circulation. With such heating the solution flows from the bottom of the display to the top. In this way, it draws fresh solution from the lower recirculation holes and moves the used solution into the reservoir through the top recirculation holes.

The present invention also has the additional advantage of being extremely simple to manufacture and of being capable of trouble-free usage for extremely long periods of time.

## Claims

1. A display device comprising a planar chamber having a transparent front wall, a planar front electrode within the chamber and visible through the front wall, a planar back electrode in spaced relationship to the front electrode and dividing the chamber into an active, display zone (4) between the front and back electrodes and a supply reservoir (5) behind the back electrode, characterised in that the chamber (4, 5) is filled with an electrochromic solution so that the device provides an electrochromic display, that the periphery of the back electrode (2) is sealed to the peripheral wall of the chamber (4, 5), that the back electrode (2) is arranged vertically within the chamber, and that the back electrode is apertured (3) at vertically spaced positions to permit solution flow between the reservoir (5) and the active display zone (4) through the apertures (3) by convection current flow during use.

2. A display device as claimed in claim 1, further characterised by means for heating the solution to augment the rate of flow of the solution between the reservoir and the display zone.

## Revendications

1. Dispositif d'affichage comprenant une chambre aplatie comprenant une paroi frontale transparente, une électrode frontale plane placée dans la chambre et visible par la paroi frontale, une électrode arrière plane placée à une certaine distance de l'électrode frontale et divisant la chambre en une zone d'affichage active (4) entre les électrodes frontale et arrière et en un réservoir d'alimentation (5) placé derrière l'électrode arrière, caractérisé en ce que la chambre (4, 5) est remplie d'une solution électrochromique de sorte que le dispositif présente un affichage électrochromique, en ce que la périphérie de l'électrode arrière (2) est scellée à la paroi periphérique de la chambre (4, 5), en ce que l'électrode arrière (2) est disposée verticalement dans la chambre, et en ce que l'électrode arriére est pourvue d'ouvertures (3) verticalement espacées pour permettre l'écoulement de la solution entre le réservoir (5) et la zone d'affichage (4) par les ouvertures (3), l'écoulement se faisant par convection au cours de l'utilisation dudit dispositif.

2. Dispositif d'affichage selon la revendication 1, caractérisé en outre par des moyens de chauffage pour chauffer la solution afin d'augmenter le débit de l'écoulement de la solution entre le réservoir et la zone d'affichage.

## Patentansprüche

1. Bildschirmanordnung, bestehend aus einer planaren Kammer mit transparenter Frontscheibe, einer planaren, durch die Frontscheibe sichtbaren Frontelektrode innerhalb der Kammer und einer planaren, im Abstand zur Frontelektrode angebrachten, rückseitigen Elektrode, die die Kammer in eine aktive Anzeigezone (4) zwischen Frontelektrode und rückseitiger Elektrode und einem Vorratsbehälter (5) hinter der rückseitigen Elektrode unterteilt, dadurch gekennzeichnet, daß die Kammer (4, 5) mit einer elektrochromischen Lösung gefüllt ist, so daß die Anordnung eine elektrochromische Anzeige bildet, daß die rückwärtige Elektrode (2) längs ihrer Umrandung mit der Umrandungswandung der Kammer (4, 5) hermetisch verbunden ist, daß die rückwärtige Elektrode (2) innerhalb der Kammer vertikal angebracht ist, und daß die rückwärtige Elektrode in vertikal auseinanderliegenden Positionen durchlöchert (3) ist, um so Durchströmung der Lösung zwischen Behälter (5) und aktiver Anzeigezone (4) über die Löcher (3) infolge von bei Betrieb auftretender Konvektionsströmung zu gestatten.

2. Bildschirmanordnung nach Anspruch 1, weiterhin gekennzeichnet durch Maßnahmen zum Aufheizen der Lösung zwecks Erhöhen der Durchflußrate der Lösung zwischen Behälter und Anzeigezone.

II

**FIG.1**

SEALING MATERIAL

1

4

2

3

5

BACK PLATE

3

SPACER

**FIG.2**